# EUROPÄISCHE PATENTSCHRIFT

(11) **EP 4 399 083 B1**
(45) Veröffentlichungstag und Bekanntmachung des Hinweises auf die Patenterteilung: **25.02.2026**
(21) Anmeldenummer: 22773462.1
(22) Anmeldetag: 05.09.2022
(51) Int. Cl.: B29C 49/42, B29C 49/06, B29L 31/00

(54) **VORRICHTUNG ZUR HERSTELLUNG VON BEHÄLTERN AUS THERMOPLASTISCHES MATERIAL AUFWEISENDEN VORFORMLINGEN**
DEVICE FOR PRODUCING CONTAINERS FROM PREFORMS COMPRISING THERMOPLASTIC MATERIAL
DISPOSITIF DE FABRICATION DE RÉCIPIENTS À PARTIR DE PRÉFORMES COMPRENANT UN MATÉRIAU THERMOPLASTIQUE

(30) Priorität: 06.09.2021 DE 102021122971
(43) Veröffentlichungstag der Anmeldung: 17.07.2024
(73) Patentinhaber: KHS GmbH, 44143 Dortmund (DE)
(72) Erfinder: HELLER, Alexander, 22941 Bargteheide (DE); LEWIN, Frank, 22889 Tangstedt (DE)
(74) Vertreter: Greiche, Albert
(86) Internationale Anmeldenummer: PCT/EP2022/074568
(87) Internationale Veröffentlichungsnummer: WO 2023/031450

(56) Entgegenhaltungen:
- DE-A1- 102017 120 762
- DE-U1- 20 308 513
- US-A- 4 244 459
- US-A1- 2009 155 036
- US-A1- 2018 086 570

## Beschreibung

Die Erfindung betrifft eine Vorrichtung zur Herstellung von Behältern aus thermoplastisches Material aufweisenden Vorformlingen.

Die Herstellung von Behältern aus thermoplastischem Material erfolgt durch das Expandieren von thermisch konditionierten Vorformlingen. Die Vorformlinge werden zunächst zum Beispiel durch einen Spritzgussprozess hergestellt und dann unsortiert bereitgestellt. Damit eine Vorrichtung zur Herstellung von Behältern aus den Vorformlingen Behälter formen kann, müssen die Vorformlinge zunächst korrekt ausgerichtet bzw. sortiert werden. Die Sortierung der Vorformlinge erfolgt in einer Sortiervorrichtung, die zum Beispiel ein Rollensortierer oder Rotationssortierer sein kann. Die Sortiervorrichtung gibt einen Strom aus sortierten Vorformlingen aus, die für die Vorrichtung zur Herstellung der Behälter korrekt ausgerichtet sind. Der Strom der sortierten Vorformlinge wird zunächst einer Heizeinrichtung zugeführt, in der die Vorformlinge thermisch konditioniert werden.

Aus DE102018116841A1 ist eine Vorrichtung zum Herstellen von Behältern bekannt, bei der die Vorformlinge mittels eines Rollensortierers ausgerichtet und einer Heizeinrichtung zugeführt werden. Nach der Heizeinrichtung werden die Vorformlinge einer Formeinrichtung zugeführt, in der die Vorformlinge zu Behältern expandiert werden.

Aus US4244459A ist eine Vorrichtung bekannt, zum Entwirren, Ausrichten und Zuführen länglicher Objekte, wie etwa Vorformlinge mit Flanschen, in eine Sortierkammer, welche die Objekte aufnimmt und sie dann an eine weitere Verarbeitungsstation weiterleitet, mit einem oder mehreren Paaren längs montierter Rollen zum Entwirren und Ausrichten der Objekte in der Sortierkammer und zum anschließenden Leiten dieser zu Schienen neben den Enden der Zuführrollenpaare, um die Objekte aufzunehmen und sie an die Verarbeitungsstation weiterzuleiten. Die Flansche an den Objekten verhindern, dass diese zwischen den Zuführrollen hindurch gelangen. Diese sind ausreichend weit voneinander entfernt, um den Körper des Objekts aufzunehmen, aber nahe genug beieinander, um den Durchgang der geflanschten Objekte dazwischen zu verhindern. Die Rollen drehen sich um Längsachsen und sind geneigt, um die Schwerkraftzufuhr der Objekte entlang ihrer Länge zu unterstützen. Schienen neben dem Ende der Zuführrollen nehmen die von dort zugeführten Objekte auf und sind außerdem geneigt, um die Schwerkraftförderung der Objekte entlang der Schiene zur nachfolgenden Verarbeitungsstation zu unterstützen. Sowohl in der Sortierkammer als auch auf den Gleisen sind Maßnahmen zur Vermeidung einer Überlastung vorgesehen.

DE 203 08 513 U1 beschreibt einen Rollensortierer, der sich in Bodennähe befindet. Zwischen dem Rollensortierer und dem erhöhten oberen Ende der Rutsche ist ein Vertikalförderer angeordnet, um die Vorformlinge anzuheben. Der Vertikalförderer bewegt die Vorformlinge im rechten Winkel zu ihren Achsen. Es bewegt sie in der Formation, die ihnen am Rollensortierer vorgegeben wurde. Es weist zwei endlose Förderstrecken auf, deren federnde, fingerartige Mitnehmer die Vorformlinge zwischen sich greifen. Diese Abschnitte sind voneinander beabstandet und werden synchron angetrieben. Der Vertikalförderer verfügt über einen mit dem Rollensortierer ausgerichteten Abfangbereich, einen mit der Rutsche ausgerichteten Endbereich und einen dazwischenliegenden Vertikalabschnitt. In Bodennähe, hinter dem Rollensortierer, befinden sich ein Preform-Inspektionsgerät und ein Preform-Rinser. Der Vertikalförderer wird synchron zur Blasmaschine angetrieben.

In US2018086570A1 wird ein Verfahren zum Ausrichten und Aufrichten von Vorformlingen in einer Reihe beschrieben, wobei das Verfahren für die Verwendung mit rotationssymmetrischen Vorformlingen mit einer ringförmigen Stützfläche vorgesehen ist. Das Verfahren umfasst: einen ersten Schritt, bei dem Vorformlinge in großen Mengen auf eine rotierende horizontale Platte entladen werden; einen zweiten Schritt, bei dem die Vorformlinge mittels der durch die Rotation der rotierenden Platte erzeugten Zentrifugalkraft an einer festen Umfangsschiene ausgerichtet werden; einen dritten Schritt, bei dem die ausgerichteten Vorformlinge sukzessive durch Kippen der Vorformkörper aufgerichtet werden, was unter der ringförmigen Stützfläche durchgeführt wird. Beim zweiten Ausrichtschritt wird die Hauptachse der Vorformlinge im Wesentlichen tangential zur Bewegungsrichtung ausgerichtet. Weiterhin wird eine Vorrichtung zur Durchführung des Verfahrens offenbart.

Aus US2009155036A1 sind eine Vorrichtung und ein Verfahren zum Sortieren von Stückgütern bekannt. Die Vorrichtung umfasst eine Sortiereinrichtung, die zwei parallel zueinander angeordnete Rollen umfasst, wobei sich diese Rollen um ihre Längsrichtung drehen können und wobei die Rollen derart ausgestaltet sind, dass die Stückgüter entlang der Rollen transportiert werden, und eine Transporteinrichtung, die die Stückgüter in Richtung der Sortiereinrichtung befördert. Gemäß bestimmten Ausführungsformen sind oberhalb der Transportvorrichtung Verschiebevorrichtungen angeordnet, die das Stückgut zumindest zeitweise kontaktieren und relativ zur Transportvorrichtung verschieben.

DE102017120762A1 beschreibt eine Vorrichtung zum Behandeln von Behältnissen mit einer Erwärmungseinrichtung zum Erwärmen von Kunststoffvorformlingen, wobei die Erwärmungseinrichtung eine Vielzahl von Erwärmungsstationen aufweist, welche zum individuellen Erwärmen der Kunststoffvorformlinge geeignet sind und wobei die Erwärmungseinrichtung eine Transporteinrichtung aufweist, welche die Kunststoffvorformlinge vereinzelt durch die Erwärmungseinrichtung transportiert, mit einer Umformungseinrichtung, welche dazu geeignet und bestimmt ist, die von der Erwärmungseinrichtung erwärmten Kunststoffvorformlinge zu Kunststoffbehältnissen umzuformen, wobei diese Umformungseinrichtung in der Transportrichtung der Kunststoffvorformlinge stromabwärts bezüglich der Erwärmungseinrichtung angeordnet ist und wobei diese Umformungseinrichtung einen beweglichen Träger aufweist, an dem eine Vielzahl von Umformungsstationen zum Umformen der Kunststoffvorformlinge zu den Kunststoffbehältnissen angeordnet ist und mit einer Transporteinrichtung, welche dazu geeignet und bestimmt ist die erwärmten Kunststoffvorformlinge vereinzelt von der Erwärmungseinrichtung zu der Umformungseinrichtung zu transportieren und mit einer Ausstattungseinrichtung, welche in der Transportrichtung der Kunststoffbehältnisse nach der Umformungseinrichtung angeordnet ist, wobei diese Ausstattungseinrichtung eine Transporteinrichtung zum vereinzelten Transport der Kunststoffbehältnisse aufweist und wobei die Ausstattungseinrichtung wenigstens ein Ausstattungsaggregat oder eine Mehrzahl von Ausstattungsaggregaten aufweist, welche zum Ausstatten der Kunststoffbehältnisse geeignet und bestimmt sind. Erfindungsgemäß weist die Vorrichtung eine Zuordnungseinrichtung und/oder eine Zuordnungsmöglichkeit auf, welche wenigstens eine Zuordnung zwischen wenigstens einer Erwärmungsstation, wenigstens einer Umformungsstation, wenigstens einem Ausstattungsaggregat und/oder wenigstens einer Befüllungseinrichtung ermöglicht.

Aufgabe der Erfindung ist die Bereitstellung einer verbesserten Vorrichtung zum Herstellen von Behältern aus thermoplastisches Material aufweisenden Vorformlingen, die eine gesteigerte Leistung und eine verringerte Anlagengröße aufweist.

Die Aufgabe wird gelöst durch die Merkmale der unabhängigen Ansprüche 1 und 12. Vorteilhafte Weiterbildungen sind Gegenstand der abhängigen Ansprüche sowie der folgenden Beschreibung.

Bei einer Vorrichtung zur Herstellung von Behältern aus thermoplastisches Material aufweisenden Vorformlingen mit einer Heizvorrichtung, die einen Strom aus thermisch konditionierten Vorformlingen ausgibt, und einer ersten Sortiervorrichtung zum Ausgeben eines sortierten ersten Vorformlingsstroms aus unsortiert in die erste Sortiervorrichtung eingegebenen Vorformlingen, ist vorgesehen, dass die Vorrichtung mindestens eine weitere Sortiervorrichtung zum Ausgeben eines vom ersten Vorformlingsstrom getrennten sortierten weiteren Vorformlingsstroms aufweist, wobei der erste Vorformlingsstrom und der weitere Vorformlingsstrom stromabwärts zur ersten Sortiervorrichtung derart zusammengeführt werden, dass sie einen in die Heizvorrichtung eintretenden gemeinsamen Vorformlingsstrom bilden.

Mit der Erfindung wird zusätzlich zur ersten Sortiervorrichtung mindestens eine weitere Sortiervorrichtung bereitgestellt, mit der die Sortierung der Vorformlinge durchgeführt werden kann. Die Vorformlingsströme der beiden Sortiervorrichtungen werden zu einem gemeinsamen Vorformlingsstrom zusammengeführt. Der gemeinsame Vorformlingsstrom wird der Heizvorrichtung zugeführt. Damit stellt die Erfindung eine Vorrichtung zum Herstellen von Behältern bereit, die mindestens eine doppelt so hohe Sortierleistung für die Vorformlinge aufweist. Die Sortiervorrichtungen benötigen wenig Stellfläche, sodass die Größe der gesamten Vorrichtung zur Herstellung der Behälter bei gleichzeitiger Leistungssteigerung minimiert werden kann. Mit dem gemeinsamen Vorformlingsstrom werden die Vorformlinge der Heizvorrichtung schneller bzw. mit höherer Dichte zugeführt als im Stand der Technik. Auf diese Weise können mehr Vorformlinge thermisch konditioniert und an die Formvorrichtung zugeführt werden, die aus den Vorformlingen Behälter expandiert.

Das Zusammenführen des ersten Vorformlingsstroms und des weiteren Vorformlingsstroms kann zum Beispiel einreihig geführt, kaskadiert oder mehrreihig erfolgen. Dazu können die Vorformlinge zum Beispiel auf einer ringförmigen Bahn geführt werden, die mehrere den Sortiervorrichtungen zugeordnete Annahmepunkte aufweist, an denen Vorformlinge aus dem ersten und weiteren Vorformlingsstrom auf die ringförmige Bahn geführt werden. Die ringförmige Bahn kann beispielsweise aus zwei Schienen gebildet sein, an denen Halteringe der Vorformlinge aufliegen. Weiter kann die ringförmige Bahn einen Abgabepunkt aufweisen, an dem die Vorformlinge aus der ringförmigen Bahn in einem gemeinsamen Vorformlingsstrom abgegeben werden.

Weiter ist denkbar, dass die erste Sortiervorrichtung und/oder die mindestens eine weitere Sortiervorrichtung zum Beispiel ein Rollensortierer für Vorformlinge ist.

Es kann auch vorgesehen sein, dass beispielsweise unterschiedliche Sortiervorrichtungen verwendet werden. So kann eine der Sortiervorrichtungen ein Rollensortierer und eine andere z. B. ein Rotationssortierer, Vibrationssortierer oder Wendelförderer oder andere Arten von Sortierern sein.

Bei der Verwendung von mehreren Rollensortierern wird die Ausrichtstrecke durch die Gesamtlänge der Rollen definiert und damit im Vergleich zur Verwendung eines einzigen Rollensortierers verlängert. Dies trägt weiter zur Leistungssteigerung bei, da mehr Vorformlinge gleichzeitig mit den Rollensortierern sortiert werden können. Gleichzeitig können die Rollensortierer parallel zueinander ausgerichtet werden und auf diese Weise die Stellfläche effizient ausnutzen bzw. minimal halten.

In einem anderen Beispiel können die erste Sortiervorrichtung und die mindestens eine weitere Sortiervorrichtung in einem gemeinsamen Gehäuse angeordnet sein.

Damit wird die Stellfläche weiter minimiert. Weiter können einzelne Komponenten gleichzeitig für beide Sortiervorrichtungen verwendet werden, so dass Redundanzen vermieden werden. So kann bei der Verwendung von zwei Rollensortierern z. B. ein gemeinsamer Antrieb und/oder eine gemeinsame Zuführung für beide Rollensortierer vorgesehen werden.

Weiter kann die Vorrichtung beispielsweise eine Steuereinheit zum Steuern der ersten Sortiervorrichtung und der mindestens einen weiteren Sortiervorrichtung aufweisen, wobei mittels der Steuereinheit jede Sortiervorrichtung separat steuerbar ist.

Damit kann die Steuereinheit die Sortiervorrichtungen so steuern, dass der gemeinsame Vorformlingsstrom auf die Kapazität der Vorrichtung zur Herstellung der Behälter bzw. auf die Kapazität der Heizvorrichtung eingestellt ist. So kann ggf. eine Sortiervorrichtung abgeschaltet oder deren Leistung reduziert werden, wenn z. B. die Geschwindigkeit der Behälterherstellung gedrosselt werden soll.

Gemäß der Erfindung ist weiter vorgesehen, dass die erste Sortiervorrichtung und die mindestens eine weitere Sortiervorrichtung eine gemeinsame Ausgabeeinrichtung zum Ausgeben des gemeinsamen Vorformlingsstroms aufweisen.

Die gemeinsame Ausgabeeinrichtung kann in diesem Beispiel in einem gemeinsamen Gehäuse mit den Sortiervorrichtungen angeordnet sein. Weiter kann die gemeinsame Ausgabeeinrichtung den gemeinsamen Vorformlingsstrom an eine Transporteinrichtung übergeben, die den gemeinsamen Vorformlingsstrom zu der Heizeinrichtung transportiert und an diese übergibt.

Weiter kann die gemeinsame Ausgabeeinrichtung zum Beispiel eine zum Zusammenführen des ersten Vorformlingsstroms und des mindestens einen weiteren Vorformlingsstroms zu dem gemeinsamen Vorformlingsstrom ausgebildete Weiche aufweisen.

Die Weiche kann dazu eine Anzahl an Eingängen aufweisen, die der Anzahl der Sortiervorrichtungen entspricht. Weiter kann die Weiche einen Ausgang aufweisen. Zu jedem Vorformlingsstrom kann die Ausgabeeinrichtung beispielsweise ein Durchlasselement zum Eintakten der Vorformlinge in die Weiche bzw. den gemeinsamen Vorformlingsstrom ausweisen an den Eingängen.

Wenn z. B. eine weitere Sortiervorrichtung vorgesehen ist, kann die Ausgabeeinrichtung z. B. zwei die Weiche beherrschende Kronenräder als Durchlasselemente aufweisen. Der erste Vorformlingsstrom wird dabei einem der Kronenräder zugeführt und der weitere Vorformlingsstrom dem anderen der Kronenräder. Dabei können die Kronenräder sortierte Vorformlinge aus dem jeweils ihnen zugeordneten Vorformlingsstrom aufnehmen und jeweils durch einen der Eingänge der Weiche lassen. Mit den Durchlasselementen kann ein Stau von Vorformlingen in der Weiche vermieden und eine kontrollierte Eingabe der Vorformlinge in die Weiche bewirkt werden.

Die Weiche kann zum Beispiel ein Y-Verteiler sein oder mehr als zwei Vorformlingsströme zusammenführen, z. B. in Form eines Kreisverteilers.

Gemäß der Erfindung ist weiter jeder Sortiervorrichtung ein eigenes Vereinzelungselement zugeordnet, das in einer Offenstellung einen Vorformling durchlässt und in einer Geschlossenstellung den Vorformlingsstrom stoppt.

Die Vorrichtung kann weiter beispielsweise stromabwärts der Sortiervorrichtungen eine Zuführvorrichtung aufweisen zum Zuführen des gemeinsamen Vorformlingsstroms an die Heizvorrichtung, wobei die Vorrichtung eine erste Übergabevorrichtung aufweist, die den ersten Vorformlingsstrom an einer ersten Übergabeposition in die Zuführvorrichtung aufnimmt, und wobei die Vorrichtung mindestens eine weitere Übergabevorrichtung aufweist, die den weiteren Vorformlingsstrom an einer weiteren Übergabeposition in die Zuführvorrichtung aufnimmt.

Bis zur Zuführvorrichtung können der erste und weitere Vorformlingsstrom getrennt voneinander transportiert werden. Die Zuführvorrichtung kann damit durch eine

Transporteinrichtung von den Sortiervorrichtungen getrennt aufgestellt werden. Weiter können dadurch die Sortiervorrichtungen an verschiedenen Positionen getrennt voneinander aufgestellt werden, um eine vorhandene Aufstellfläche optimal auszunutzen.

In diesem Beispiel ist denkbar, dass die erste Übergabevorrichtung und die mindestens eine weitere Übergabevorrichtung jeweils ein Transportrad für Vorformlinge aufweisen kann.

Die Transporträder der Übergabevorrichtungen übergeben dabei Vorformlinge aus dem ersten Vorformlingsstrom und dem weiteren Vorformlingsstrom in den gemeinsamen Vorformlingsstrom. Dies kann unmittelbar vor oder bereits innerhalb der Heizeinrichtung erfolgen.

Ein Transportrad ist in diesem Beispiel ein drehend gelagertes Transportmittel mit in einem Abstand um die Drehachse verteilt angeordneten Halteelementen. Die Halteelemente können zum Beispiel entlang eines Umfangs des Transportrads angeordnet sein.

Gemäß einem weiteren Beispiel kann die Zuführvorrichtung eine Mehrzahl von Halteelementen zum Halten von Vorformlingen aufweisen, wobei eine erste Gruppe der Halteelemente an der ersten Übergabeposition Vorformlinge aus dem ersten Vorformlingsstrom aufnimmt und eine weitere Gruppe der Halteelemente an der weiteren Übergabeposition Vorformlinge aus dem weiteren Vorformlingsstrom aufnimmt.

Die Halteelemente können z. B. bewegliche angeordnete Greifer zum Greifen von Vorformlingen sein.

Weiter ist denkbar, dass die Halteelemente der ersten Gruppe und die Halteelemente der weiteren Gruppe zum Beispiel abwechselnd an der Zuführvorrichtung angeordnet sind.

Auf diese Weise wird abwechselnd ein Vorformling aus dem ersten Vorformlingsstrom und ein Vorformling aus dem weiteren Vorformlingsstrom in den gemeinsamen Vorformlingsstrom überführt. Wenn ein Halteelement aus einer Gruppe stromabwärts einem Halteelement aus der anderen Gruppe angeordnet ist, wird dies bereits als abwechselnd verstanden.

Weiter kann die Vorrichtung zum Beispiel ein erstes Zuführmittel zum Zuführen von Vorformlingen zur ersten Übergabevorrichtung und mindestens ein weiteres Zuführmittel zum Zuführen von Vorformlingen zu der mindestens einen weiteren Übergabevorrichtung aufweisen.

Ein Zuführmittel kann z. B. als Sternrad ausgebildet sein, das an seinem Umfang Ausnehmungen zum Aufnehmen von Vorformlingen aufweist, die an dem Sternrad in festen Abständen zueinander angeordnet sind. Die Sternräder können Vorformlinge von Transporteinrichtungen aufnehmen, um die Abstände zwischen den Vorformlingen im ersten Vorformlingsstrom und im weiteren Vorformlingsstrom zu homogenisieren.

In einem Beispiel kann die Vorrichtung für jede Sortiervorrichtung eine eigene Eingabeeinrichtung aufweisen. Die Eingabeeinrichtung ist dazu ausgebildet, unsortierte Vorformlinge aufzunehmen und der Sortiervorrichtung zuzuführen. Die Aufnahme der unsortierten Vorformlinge kann durch das Beschicken von Vorformlingen durch Personal oder alternativ durch eine Transporteinrichtung erfolgen.

In einem alternativen Beispiel ist denkbar, dass die Vorrichtung eine gemeinsame Eingabeeinrichtung zum Eingeben von unsortierten Vorformlingen in die erste und die weitere Sortiervorrichtungen aufweist.

Wenn die Vorrichtung zum Herstellen von Behältern mehr als eine weitere Sortiervorrichtungen aufweist, ist es denkbar, dass die Sortiervorrichtungen in Gruppen zusammengefasst werden können. Eine Eingabeeinrichtung kann dann zum Bereitstellen von unsortierten Vorformlingen für zwei oder mehr als zwei Sortiervorrichtungen fungieren.

Mit der gemeinsamen Eingabeeinrichtung wird für mindestens zwei Sortiervorrichtungen eine zentrale Eingabestelle für unsortierte Vorformlinge bereitgestellt. Damit kann der Aufwand für die Bereitstellung der unsortierten Vorformlinge und die Stellfläche für die Eingabeeinrichtung möglichst klein gehalten werden.

Im Folgenden wird die Erfindung anhand einer beispielhaften Ausführungsform mittels der beigefügten Zeichnung beschrieben. Es zeigen:
Figur 1 eine schematische Darstellung einer Vorrichtung zum Herstellen von Behältern gemäß einem ersten Beispiel; und
Figur 2a, b eine schematische Darstellung eines weiteren Beispiels von Sortiervorrichtungen.

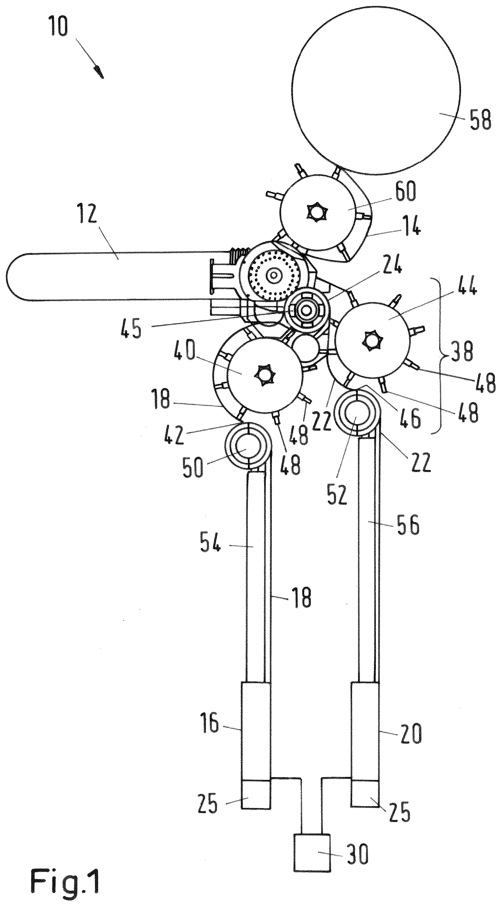

Die Vorrichtung zur Herstellung von Behältern aus thermoplastisches Material aufweisenden Vorformlingen wird im Folgenden in ihrer Gesamtheit mit dem Bezugszeichen 10 bezeichnet, wie in Figur 1 dargestellt. Figur 1 zeigt dabei ein erstes Ausführungsbeispiel der Vorrichtung 10.

Die Vorrichtung 10 zur Herstellung von Behältern weist eine erste Sortiervorrichtung 16, mindestens eine weitere Sortiervorrichtung 20 und eine Heizvorrichtung 12. Die Vorrichtung 10 kann weiter eine Formvorrichtung 58 zum Ausformen von Behältern aus Vorformlingen aufweisen.

Die erste Sortiervorrichtung 16 weist eine Eingabevorrichtung 25 zum Eingeben von unsortierten Vorformlingen auf. Mit der Eingabevorrichtung 25 können die Vorformlinge der ersten Sortiervorrichtung 16 zugeführt werden. Die erste Sortiervorrichtung 16 kann ein Rollensortierer sein, der die Vorformlinge sortiert und in eine bestimmte Ausrichtung orientiert. Ein Rollensortierer weist dazu zwei parallel angeordneten Rollen auf, zwischen denen ein Spalt angeordnet ist, der größer als der Körper der Vorformlinge jedoch kleiner als ein Haltekragen der Vorformlinge ist. Die Rollen drehen in entgegengesetzter Richtung. Vorformlinge, die mit den Rollen in Kontakt kommen, werden durch die Drehbewegung der Rollen so lange bewegt, bis die Körper der Vorformlinge durch den Spalt fällt. Da der Haltekragen größer als der Spalt ist, hängt der entsprechende Vorformling dann zwischen den beiden Rollen und wird dann aus dem Rollensortierer, z. B. mittels einer Ablaufschiene, hinausbefördert. Die erste Sortiervorrichtung 16 gibt einen ersten Vorformlingsstrom 18 aus.

Die weitere Sortiervorrichtung 20 umfasst ebenfalls eine Eingabevorrichtung 25 zum Eingeben von unsortierten Vorformlingen. Die weitere Sortiervorrichtung 20 kann ebenfalls ein Rollensortierer sein. Alternativ kann die weitere Sortiervorrichtung 20 und/oder auch die erste Sortiervorrichtung 16 eine Rotationssortierer sein, bei dem eine rotierende Platte die Vorformlinge mittels feststehender spiralförmiger Führungsschienen in eine gemeinsame Orientierung bringt. Die weitere Sortiervorrichtung 20 gibt einen weiteren Vorformlingsstrom 22 aus.

Es können beliebig viele weitere Sortiervorrichtungen 20 vorgesehen werden. Die Sortiervorrichtungen 16, 20 benötigen wenig Stellfläche, sodass die Größe der gesamten Vorrichtung 10 zur Herstellung der Behälter bei gleichzeitiger Leistungssteigerung, insbesondere beim Sortieren der Vorformlinge minimiert werden kann.

In diesem Beispiel sind die erste Sortiervorrichtung 16 und die weitere Sortiervorrichtung 20 voneinander getrennt. Der erste Vorformlingsstrom 18, der von der ersten Sortiervorrichtung 16 ausgegeben wird, wird von einer ersten Transporteinrichtung 54 übernommen. Die erste Transporteinrichtung 54 führt den ersten Vorformlingsstrom 18 an eine Zuführvorrichtung 38, die den ersten Vorformlingsstrom 18 an die Heizvorrichtung 12 übergibt.

Die Transporteinrichtungen 54, 56 können zum Beispiel Ablaufschienen sein, an denen die Vorformlinge über ihre Haltekragen gelagert sind. Die Vorformlinge rutschen an den Ablaufschienen dann stromabwärts in Richtung der Heizvorrichtung 12.

Der weitere Vorformlingsstrom 22, der von der weiteren Sortiervorrichtung 20 ausgegeben wird, wird von einer weiteren Transporteinrichtung 56 übernommen. Die weitere Transporteinrichtung 56 führt den weiteren Vorformlingsstrom 22 ebenfalls an die Zuführvorrichtung 38. Auch der zweite Vorformlingsstrom 22 wird an die Heizvorrichtung 12 übergeben.

Die Zuführvorrichtung 38 führt dabei den ersten Vorformlingsstrom 18 und den weiteren Vorformlingsstrom 22 zu einem gemeinsamen Vorformlingsstrom 24 zusammen. Der gemeinsame Vorformlingsstrom 24 wird dann an die Heizvorrichtung 12 übergeben.

Zum Übernehmen der Vorformlingsströme 18, 22 weist die Zuführvorrichtung 38 ein erstes Zuführmittel 50 und ein weiteres Zuführmittel 52, eine erste Übergabevorrichtung 40 und eine weitere Übergabevorrichtung 44, sowie ein Abgabemittel 45 auf. Das erste Zuführmittel 50 ist der ersten Transporteinrichtung 54 zugeordnet und das weitere Zuführmittel 52 ist der weiteren Transporteinrichtung 56 zugeordnet.

Das erste Zuführmittel 50 nimmt den ersten Vorformlingsstrom 18 von der ersten Transporteinrichtung 54 entgegen und leitet ihn über eine erste Übergabeposition 42 an die erste Übergabevorrichtung 40 weiter. Die erste Übergabevorrichtung 40 übergibt den ersten Vorformlingsstrom 18 an das Abgabemittel 45. Weiter nimmt das weitere Zuführmittel 52 den weiteren Vorformlingsstrom 22 an einer weiteren Übergabeposition 46 von der weiteren Transporteinrichtung 56 entgegen. Das weitere Zuführmittel 52 leitet den weiteren Vorformlingsstrom 22 an die weitere Übergabevorrichtung 44 weiter, die ihn an das Abgabemittel 45 übergibt. Der erste Vorformlingsstrom 18 und der zweite Vorformlingsstrom 22 werden an dem Abgabemittel 45 zu dem gemeinsamen Vorformlingsstrom 24 zusammengeführt.

Die Zuführmittel 50, 52 können z. B. Sternräder sein, bei denen die transportierten Vorformlinge konstante Abstände zueinander aufweisen. Ein Sternrad weist dabei an seinem Umfang Buchten auf, an denen jeweils ein Vorformling, z. B. an einem Haltekragen, gehalten und transportiert werden kann.

Das Abgabemittel 45 übergibt den gemeinsamen Vorformlingsstrom 24 an die Heizvorrichtung 12.

Die Übergabevorrichtungen 40, 44 können als Transporträder ausgebildet sein. Weiter können sie eine Mehrzahl von Halteelementen 48 zum Halten von Vorformlingen aufweisen. Die Halteelemente 48 können zum Beispiel Greifer aufweisen, die auf oder nahe einem Umfang an dem Transportrad schwenkbar befestigt sind. Damit können die Abstände zwischen den einzelnen Halteelementen 48 an den Übergabevorrichtungen 40, 44 entlang der Strömungsrichtung der Vorformlinge am Transportrad verändert werden, um die Übergabe zu erleichtern.

Weiter kann eine erste Gruppe der Halteelemente 48 an der ersten Übergabeposition 42 Vorformlinge aus dem ersten Vorformlingsstrom 18 aufnehmen. Eine weitere Gruppe der Halteelemente 48 kann an der weiteren Übergabeposition 46 Vorformlinge aus dem weiteren Vorformlingsstrom 22 aufnehmen. Die erste Gruppe der Halteelemente 48 ist in diesem Beispiel der ersten Übergabevorrichtung 40 zugeordnet. Die weitere Gruppe der Halteelemente 48 ist in diesem Beispiel der weiteren Übergabevorrichtung 44 zugeordnet.

Die Halteelemente 48 der ersten Gruppe und die Halteelemente 48 der weiteren Gruppe können abwechselnd an der Zuführvorrichtung 38 angeordnet sein.

In der Heizvorrichtung 12 werden die Vorformlinge im gemeinsamen Vorformlingsstrom 24 thermisch konditioniert. Über ein Transportrad 60 kann der Strom 14 aus thermisch konditionierten Vorformlingen, der von der Heizvorrichtung 12 ausgegeben wird, an die Formvorrichtung 58 übergeben werden. In der Formvorrichtung 58 werden die thermisch konditionierte Vorformlinge zu Behältern expandiert.

Die Vorrichtung 10 kann weiter eine Steuereinheit 30 aufweisen, die die erste Sortiervorrichtung 16 und die weitere Sortiervorrichtung 20 steuert. Dabei kann jede Sortiervorrichtung 16, 20 einzeln angesteuert werden. So kann eine Sortiervorrichtung 16, 20 gedrosselt laufen, wenn eine der stromabwärts angeordneten Vorrichtungen Kapazitätsgrenze erreicht hat, bzw. wenn deren Kapazitätsgrenze reduziert wurde.

Aus der oben angeführten Beschreibung des Beispiels gemäß Figur 1 wird deutlich, dass die Vorformlingsströme 18, 22 nach Verlassen der Sortiervorrichtungen 16, 20 getrennt geführt werden. In diesem Beispiel werden sie erst unmittelbar vor der Heizvorrichtung 12 zu dem gemeinsamen Vorformlingsstrom 24 zusammengeführt. Damit sei jedoch nicht ausgeschlossen, dass das Zusammenführen des ersten und weiteren Vorformlingsstroms 18, 22 in einem größeren Abstand stromaufwärts zur Heizvorrichtung 12 durchgeführt wird.

Weiter ist denkbar, dass der erste Vorformlingsstrom 18 und der weitere Vorformlingsstrom 22 unmittelbar nach Verlassen der ersten und weiteren Sortiervorrichtung 16, 20 zu dem gemeinsamen Vorformlingsstrom 24 zusammengeführt werden.

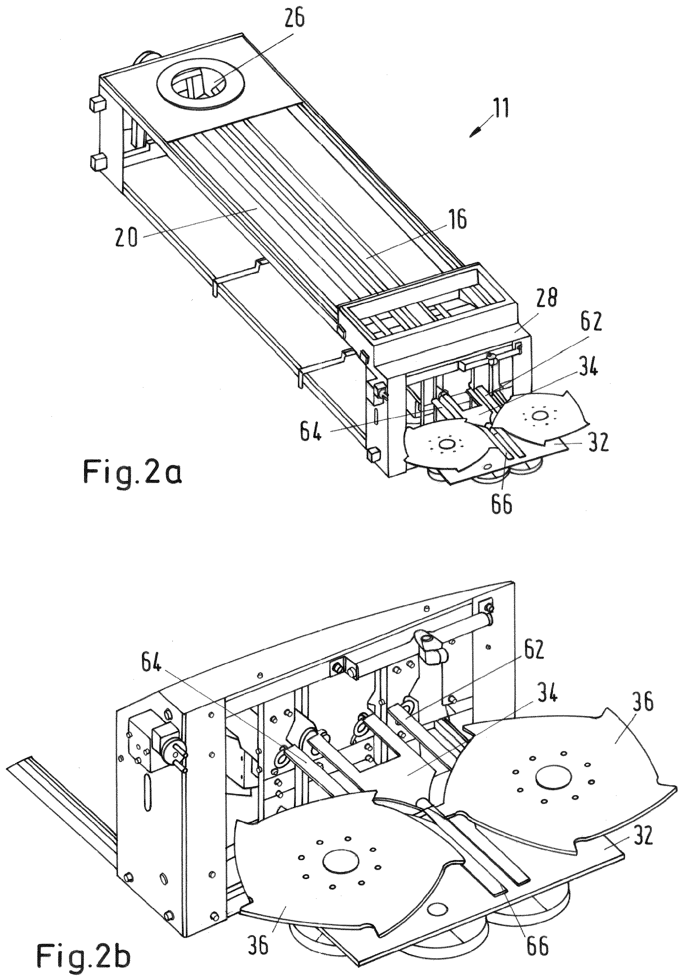

Ein Beispiel hierfür wird in den Figuren 2a und 2b gezeigt. Die Figuren 2a und 2b zeigen dazu alternative Sortiervorrichtungen 16, 20 der Vorrichtung 10.

Figur 2a stellt dabei eine gemeinsame Sortiervorrichtung 11 dar, die die erste Sortiervorrichtung 16 und die zweite Sortiervorrichtung 20 in einem gemeinsamen Gehäuse 28 aufweist. In diesem Beispiel sind beide Sortiervorrichtungen 16, 20 als Rollensortierer ausgebildet. Die Rollen der Sortiervorrichtungen 16, 20 sind parallel zueinander angeordnet. Sie beginnen an einer gemeinsamen Eingabevorrichtung 26, die zum Eingeben von unsortierten Vorformlingen in die beiden Sortiervorrichtungen 16, 20 ausgebildet ist.

In diesem Fall wird daher lediglich eine einzige Eingabevorrichtung 26 mit unsortierten Vorformlingen beschickt, die parallel von der ersten Sortiervorrichtung 16 und der weiteren Sortiervorrichtung 20 gleichzeitig sortiert werden. Die erste Sortiervorrichtung 16 gibt dabei wieder einen ersten Vorformlingsstrom 18 aus. Die weitere Sortiervorrichtung 20 gibt einen weiteren Vorformlingsstrom 22 aus.

Die beiden Sortiervorrichtungen 20, 22 können ebenfalls durch eine Steuereinheit 30 (in Fig. 2a, b nicht dargestellt) separat gesteuert werden.

Die gemeinsame Sortiervorrichtung 11 weist eine in Figur 2b dargestellte gemeinsame Ausgabeeinrichtung 32 auf, die den ersten Vorformlingsstrom 18 und den weiteren Vorformlingsstrom 22 in einem gemeinsamen Vorformlingsstrom 24 unmittelbar nach der gemeinsamen Sortiervorrichtung 11 zusammenführt. Dazu weist die gemeinsame Ausgabeeinrichtung 32 eine Weiche 34 auf. In diesem Beispiel sind lediglich zwei Sortiervorrichtungen 16, 20 vorhanden. Daher weist die Weiche 34 eine Y-Form auf, wobei der erste und weitere Vorformlingsstrom 18, 22 jeweils an einem der zwei Eingänge 62, 64 der Weiche 34 angeschlossen sind und der gemeinsamen Vorformlingsstrom 24 an einem Ausgang 66 der Weiche 34 ausgegeben wird.

In diesem Beispiel ist die Weiche 34 ein Y-Verteiler. In einem anderen Beispiel kann die Weiche 34 z. B. ein Kreisverteiler sein, insbesondere, wenn mehr als eine weitere Sortiervorrichtung 20 vorgesehen wird.

Die Ausgabeeinrichtung 32 weist weiter Vereinzelungselemente 36 auf, wobei jeder Sortiervorrichtung 16, 20 ein eigenes Vereinzelungselement 36 zugeordnet ist. Ein Vereinzelungselement 36 kann dabei in einer Offenstellung ein Vorformling durchlassen und in einer Geschlossenstellung den jeweils zugeordneten Vorformlingsstrom stoppen. Vereinzelungselemente 36 sind an den Eingängen 62, 64 der Weiche 34 angeordnet.

Die Vereinzelungselemente 36 sind in diesem Beispiel Kronenräder, die die Eingänge 62, 64 der Weiche 34 beherrschen. Die Kronenräder weisen Zacken auf, mit denen die Eingänge 62 ,64 der Weiche 34 in der Geschlossenstellung gesperrt werden können. Der jeweils zugeordnete Vorformlingsstrom 18, 22 wird dann gestoppt.

In der Offenstellung können die Kronenräder jeweils einen Vorformling durchlassen, so dass kontrolliert jeweils ein Vorformling aus dem jeweils zugeordneten Vorformlingsstrom 18, 22 entnommen und über die Weiche 34 dem gemeinsamen Vorformlingsstrom 24 zugeführt wird.

Mit den Vereinzelungselementen 36 werden die Vorformlinge des ersten bzw. des weiteren Vorformlingsstroms 18, 22 auf Abstand zueinander gebracht.

Alternativ zu den Kronenrädern können Ketten oder Bänder oder andere Vereinzelungselemente 36 vorgesehen werden.

### Bezugszeichenliste

| | | | |
|---|---|---|---|
| 10 | Vorrichtung zur Herstellung von Be- hältern | 36 | Vereinzelungselement |
| | | 38 | Zuführvorrichtung |
| 11 | gemeinsame Sortiervorrichtung | 40 | Übergabevorrichtung |
| 12 | Heizvorrichtung | 42 | erste Übergabeposition |
| 14 | Strom thermisch konditionierter Vor- formlinge | 44 | Übergabevorrichtung |
| | | 45 | Abgabemittel |
| 16 | erste Sortiervorrichtung | 46 | weitere Übergabeposition |
| 18 | erster Vorformlingsstrom | 48 | Halteelement |
| 20 | weitere Sortiervorrichtung | 50 | Zuführmittel |
| 22 | weiterer Vorformlingsstrom | 52 | Zuführmittel |
| 24 | gemeinsamer Vorformlingsstrom | 54 | erste Transporteinrichtung |
| 25 | Eingabevorrichtung | 56 | weitere Transporteinrichtung |
| 26 | gemeinsame Eingabevorrichtung | 58 | Formvorrichtung |
| 28 | Gehäuse | 60 | Transportrad |
| 30 | Steuereinheit | 62 | Eingang |
| 32 | Ausgabeeinrichtung | 64 | Eingang |
| 34 | Weiche | 66 | Ausgang |

## Patentansprüche

1. Vorrichtung (10) zur Herstellung von Behältern aus thermoplastisches Material aufweisenden Vorformlingen mit einer Heizvorrichtung (12), die einen Strom (14) aus thermisch konditionierten Vorformlingen ausgibt, und einer ersten Sortiervorrichtung (16) zum Ausgeben eines sortierten ersten Vorformlingsstroms (18) aus unsortiert in die erste Sortiervorrichtung (16) eingegebenen Vorformlingen, wobei die Vorrichtung (10) mindestens eine weitere Sortiervorrichtung (20) zum Ausgeben eines vom ersten Vorformlingsstrom (18) getrennten sortierten weiteren Vorformlingsstroms (22) aufweist, wobei der erste Vorformlingsstrom (18) und der weitere Vorformlingsstrom (22) stromabwärts zur ersten Sortiervorrichtung (16) derart zusammengeführt werden, dass sie einen in die Heizvorrichtung (12) eintretenden gemeinsamen Vorformlingsstrom (24) bilden, wobei die Vorrichtung (10) eine Ausgabeeinrichtung (32) zum Ausgeben des gemeinsamen Vorformlingsstroms (24) aus der ersten Sortiervorrichtung (16) und der mindestens einen weiteren Sortiervorrichtung (20) aufweist **dadurch gekennzeichnet, dass** jeder Sortiervorrichtung (16, 20) ein eigenes Vereinzelungselement (36) zugeordnet ist, das in einer Offenstellung einen Vorformling durchlässt und in einer Geschlossenstellung den Vorformlingsstrom stoppt.

2. Vorrichtung nach Anspruch 1, **dadurch gekennzeichnet, dass** die erste Sortiervorrichtung (16) und/oder die mindestens eine weitere Sortiervorrichtung (20) ein Rollensortierer für Vorformlinge ist.

3. Vorrichtung nach Anspruch 1 oder 2, **dadurch gekennzeichnet, dass** die erste Sortiervorrichtung (16) und die mindestens eine weitere Sortiervorrichtung (20) in einem gemeinsamen Gehäuse (28) angeordnet sind.

4. Vorrichtung nach einem der Ansprüche 1 bis 3, **dadurch gekennzeichnet, dass** die Vorrichtung (10) eine Steuereinheit (30) zum Steuern der ersten Sortiervorrichtung (16) und der mindestens einen weiteren Sortiervorrichtung (20) aufweist, wobei mittels der Steuereinheit (30) jede Sortiervorrichtung (16, 20) separat steuerbar ist.

5. Vorrichtung nach einem der Ansprüche 1 bis 4, **dadurch gekennzeichnet, dass** die gemeinsame Ausgabeeinrichtung (32) eine zum Zusammenführen des ersten Vorformlingsstroms (18) und des mindestens einen weiteren Vorformlingsstroms (22) zu dem gemeinsamen Vorformlingsstrom (24) ausgebildete Weiche (34) aufweist.

6. Vorrichtung nach einem der Ansprüche 1 bis 5, **dadurch gekennzeichnet, dass** die Vorrichtung (10) stromabwärts der Sortiervorrichtungen (16, 20) eine Zuführvorrichtung (38) aufweist zum Zuführen des gemeinsamen Vorformlingsstroms (24) an die Heizvorrichtung (12), wobei die Vorrichtung (10) eine erste Übergabevorrichtung (40) aufweist, die den ersten Vorformlingsstrom (18) an einer ersten Übergabeposition (42) in die Zuführvorrichtung (38) aufnimmt, und wobei die Vorrichtung (10) mindestens eine weitere Übergabevorrichtung (44) aufweist, die den weiteren Vorformlingsstrom (22) an einer weiteren Übergabeposition (46) in die Zuführvorrichtung (38) aufnimmt.

7. Vorrichtung nach Anspruch 6, **dadurch gekennzeichnet, dass** die erste Übergabevorrichtung (40) und die mindestens eine weitere Übergabevorrichtung (44) jeweils ein Transportrad für Vorformlinge aufweisen.

8. Vorrichtung nach Anspruch 7, **dadurch gekennzeichnet, dass** die Transporträder eine Mehrzahl von Halteelementen (48) zum Halten von Vorformlingen aufweisen, wobei eine erste Gruppe der Halteelemente (48) an der ersten Übergabeposition (42) Vorformlinge aus dem ersten Vorformlingsstrom (18) aufnimmt und eine weitere Gruppe der Halteelemente (48) an der weiteren Übergabeposition (46) Vorformlinge aus dem weiteren Vorformlingsstrom (22) aufnimmt.

9. Vorrichtung nach Anspruch 8, **dadurch gekennzeichnet, dass** die Halteelemente (48) der ersten Gruppe und die Halteelemente (48) der weiteren Gruppe abwechselnd an der Zuführvorrichtung (38) angeordnet sind.

10. Vorrichtung nach einem der Ansprüche 6 bis 9, **dadurch gekennzeichnet, dass** die Vorrichtung (10) ein erstes Zuführmittel (50) zum Zuführen von Vorformlingen zur ersten Übergabevorrichtung (40) und mindestens ein weiteres Zuführmittel (52) zum Zuführen von Vorformlingen zu der mindestens einen weiteren Übergabevorrichtung (44) aufweist.

11. Vorrichtung nach einem der Ansprüche 1 bis 10, **dadurch gekennzeichnet, dass** die Vorrichtung (10) eine gemeinsame Eingabeeinrichtung (26) aufweist zum Eingeben von unsortierten Vorformlingen in die erste und die weitere Sortiervorrichtungen (16, 20).

12. Verfahren zur Herstellung von Behältern aus thermoplastisches Material aufweisenden Vorformlingen, umfassend zumindest folgende Schritte:
- Ausgeben eines sortierten ersten Vorformlingsstroms (18) aus unsortiert in eine erste Sortiervorrichtung (16) eingegebenen Vorformlingen;
- Ausgeben eines vom ersten Vorformlingsstrom (18) getrennten sortierten weiteren Vorformlingsstroms (22) aus mindestens einer weiteren Sortiervorrichtung (20);
- Zusammenführen des ersten Vorformlingsstroms (18) und des zweiten Vorformlingsstroms (20) zu einem gemeinsamen Vorformlingsstrom (24);
- Ausgeben des gemeinsamen Vorformlingsstroms (24) aus der ersten Sortiervorrichtung (16) und der mindestens einen weiteren Sortiervorrichtung (20) mittels einer Ausgabeeinrichtung (32); und
- Zuführen des gemeinsamen Vorformlingsstroms zu einer Heizvorrichtung (12), die einen Strom (14) aus thermisch konditionierten Vorformlingen ausgibt;
**dadurch gekennzeichnet, dass** jeder Sortiervorrichtung (16, 20) ein eigenes Vereinzelungselement (36) zugeordnet ist, das in einer Offenstellung einen Vorformling durchlässt und in einer Geschlossenstellung den Vorformlingsstrom stoppt.

13. Verfahren nach Anspruch 12, **dadurch gekennzeichnet, dass** jede Sortiervorrichtung separat mittels einer Steuereinheit (30) zum Steuern der ersten Sortiervorrichtung (16) und der mindestens einen weiteren Sortiervorrichtung (20) angesteuert wird.

14. Verfahren nach Anspruch 12 oder 13, **dadurch gekennzeichnet, dass** der Schritt: Zusammenführen des ersten Vorformlingsstroms und des zweiten Vorformlingsstroms zu einem gemeinsamen Vorformlingsstrom, mittels einer Weiche durchgeführt wird.

15. Verfahren nach einem der Ansprüche 12 bis 14, **dadurch gekennzeichnet, dass** das Verfahren weiter mindestens folgende Schritte aufweist:
- Aufnehmen des ersten Vorformlingsstroms (18) an einer ersten Übergabeposition (42) mittels einer ersten Übergabevorrichtung (40) in eine Zuführvorrichtung (38), die stromabwärts der Sortiervorrichtungen (16, 20) angeordnet ist;
- Aufnehmen des zweiten Vorformlingsstroms (22) an einer weiteren Übergabeposition (46) mittels mindestens einer weiteren Übergabevorrichtung (44) in die Zuführvorrichtung (38).

## Claims

1. Device (10) for producing containers from preforms made of thermoplastic material, comprising a heating device (12) which outputs a stream (14) of thermally conditioned preforms, and a first sorting device (16) for outputting a sorted first preform stream (18) from preforms fed unsorted into the first sorting device (16), wherein the device (10) comprises at least one further sorting device (20) for discharging a sorted further preform stream (22) separated from the first preform stream (18), wherein the first preform stream (18) and the further preform stream (22) are combined downstream of the first sorting device (16) such that they form a common preform stream (24) entering the heating device (12), wherein the device (10) has a discharge device (32) for discharging the common preform stream (24) from the first sorting device (16) and the at least one further sorting device (20), **characterised in that** each sorting device (16, 20) is assigned its own separating element (36) which, in an open position, allows a preform to pass through and, in a closed position, stops the preform stream.

2. Device according to claim 1, **characterised in that** the first sorting device (16) and/or the at least one further sorting device (20) is a roller sorter for preforms.

3. Device according to claim 1 or 2, **characterised in that** the first sorting device (16) and the at least one further sorting device (20) are arranged in a common housing (28).

4. Device according to one of claims 1 to 3, **characterised in that** the device (10) has a control unit (30) for controlling the first sorting device (16) and the at least one further sorting device (20), wherein each sorting device (16, 20) can be controlled separately by the control unit (30).

5. Device according to one of claims 1 to 4, **characterised in that** the common discharge device (32) has a switch (34) designed to merge the first preform stream (18) and the at least one further preform stream (22) into the common preform stream (24).

6. Device according to one of claims 1 to 5, **characterised in that** the device (10) has a feed device (38) downstream of the sorting devices (16, 20) for feeding the common preform stream (24) to the heating device (12), wherein the device (10) comprises a first transfer device (40) which receives the first preform stream (18) at a first transfer position (42) into the feed device (38), and wherein the device (10) comprises at least one further transfer device (44) which receives the further preform stream (22) into the feed device (38) at a further transfer position (46).

7. Device according to claim 6, **characterised in that** the first transfer device (40) and the at least one further transfer device (44) each comprise a transport wheel for preforms.

8. Device according to claim 7, **characterised in that** the transport wheels have a plurality of holding elements (48) for holding preforms, wherein a first group of the holding elements (48) at the first transfer position (42) receives preforms from the first preform stream (18) and a further group of the holding elements (48) at the further transfer position (46) receives preforms from the further preform stream (22).

9. Device according to claim 8, **characterised in that** the holding elements (48) of the first group and the holding elements (48) of the further group are arranged alternately on the feed device (38).

10. Device according to one of claims 6 to 9, **characterised in that** the device (10) has a first feed means (50) for feeding preforms to the first transfer device (40) and at least one further feed means (52) for feeding preforms to the at least one further transfer device (44).

11. Device according to one of claims 1 to 10, **characterised in that** the device (10) has a common input device (26) for inputting unsorted preforms into the first and further sorting devices (16, 20).

12. Method for producing containers from preforms comprising thermoplastic material, comprising at least the following steps:
- dispensing a sorted first preform stream (18) from unsorted preforms fed into a first sorting device (16);
- dispensing a sorted further preform stream (22) separated from the first preform stream (18) from at least one further sorting device (20);
- merging the first preform stream (18) and the second preform stream (20) into a common preform stream (24);
- discharging the common preform stream (24) from the first sorting device (16) and the at least one further sorting device (20) by a discharge device (32); and
- feeding the common preform stream to a heating device (12) which outputs a stream (14) of thermally conditioned preforms;
**characterised in that** each sorting device (16, 20) is assigned its own separating element (36) which, in an open position, allows a preform to pass through and, in a closed position, stops the preform stream.

13. Method according to claim 12, **characterised in that** each sorting device is controlled separately by a control unit (30) for controlling the first sorting device (16) and the at least one further sorting device (20).

14. Method according to claim 12 or 13, **characterised in that** the step of merging the first preform stream and the second preform stream into a common preform stream is performed by a switch.

15. Method according to one of claims 12 to 14, **characterised in that** the method further comprises at least the following steps:
- receiving the first preform stream (18) at a first transfer position (42) by a first transfer device (40) into a feed device (38) which is arranged downstream of the sorting devices (16, 20);
- receiving the further preform stream (22) at a further transfer position (46) by at least one further transfer device (44) into the feed device (38).

## Revendications

1. Dispositif (10) pour la fabrication de récipients à partir de préformes en matière thermoplastique, comprenant un dispositif de chauffage (12) qui délivre un flux (14) de préformes conditionnées thermiquement, et un premier dispositif de tri (16) pour délivrer un premier flux de préformes triées (18) à partir de préformes non triées introduites dans le premier dispositif de tri (16), le dispositif (10) comportant au moins un autre dispositif de tri (20) pour délivrer un autre flux de préformes triées (22) séparé du premier flux de préformes (18), le premier flux de préformes (18) et l'autre flux de préformes (22) sont réunis en aval du premier dispositif de tri (16) de manière à former un flux commun de préformes (24) entrant dans le dispositif de chauffage (12), le dispositif (10) comportant un dispositif de sortie (32) pour évacuer le flux commun de préformes (24) du premier dispositif de tri(16) et du au moins un autre dispositif de tri (20), **caractérisé en ce qu'**à chaque dispositif de tri (16, 20) est associé un élément de séparation (36) propre qui, en position ouverte, laisse passer une préforme et, en position fermée, arrête le flux de préformes.

2. Dispositif selon la revendication 1, **caractérisé en ce que** le premier dispositif de tri (16) et/ou le au moins un autre dispositif de tri (20) est un trieur à rouleaux pour préformes.

3. Dispositif selon la revendication 1 ou 2, **caractérisé en ce que** le premier dispositif de tri (16) et le au moins un autre dispositif de tri (20) sont disposés dans un boîtier commun (28).

4. Dispositif selon l'une des revendications 1 à 3, **caractérisé en ce que** le dispositif (10) comprend une unité de commande (30) pour commander le premier dispositif de tri (16) et le au moins un autre dispositif de tri (20), chaque dispositif de tri (16, 20) pouvant être commandé séparément au moyen de l'unité de commande (30).

5. Dispositif selon l'une des revendications 1 à 4, **caractérisé en ce que** le dispositif de sortie commun (32) comprend un aiguillage (34) conçu pour réunir le premier flux de préformes (18) et le au moins un autre flux de préformes (22) en un flux commun de préformes (24).

6. Dispositif selon l'une des revendications 1 à 5, **caractérisé en ce que** le dispositif (10) comporte, en aval des dispositifs de tri (16, 20), un dispositif d'alimentation (38) pour acheminer le flux commun de préformes (24) vers le dispositif de chauffage (12), le dispositif (10) comportant un premier dispositif de transfert (40) qui reçoit le premier flux de préformes (18) dans le dispositif d'alimentation (38) à une première position de transfert (42), et dans lequel le dispositif (10) comprend au moins un autre dispositif de transfert (44) qui reçoit l'autre flux de préformes (22) dans le dispositif d'alimentation (38) à une autre position de transfert (46).

7. Dispositif selon la revendication 6, **caractérisé en ce que** le premier dispositif de transfert (40) et le au moins un autre dispositif de transfert (44) comportent chacun une roue de transport pour les préformes.

8. Dispositif selon la revendication 7, **caractérisé en ce que** les roues de transport comportent une pluralité d'éléments de maintien (48) pour maintenir des préformes, un premier groupe desdits éléments de maintien (48) reçoit des préformes provenant du premier flux de préformes (18) au niveau de la première position de transfert (42) et un autre groupe d'éléments de maintien (48) reçoit des préformes provenant d'un autre flux de préformes (22) à l'autre position de transfert (46).

9. Dispositif selon la revendication 8, **caractérisé en ce que** les éléments de maintien (48) du premier groupe et les éléments de maintien (48) de l'autre groupe sont disposés en alternance sur le dispositif d'alimentation (38).

10. Dispositif selon l'une des revendications 6 à 9, **caractérisé en ce que** le dispositif (10) comprend un premier moyen d'alimentation (50) pour alimenter des préformes vers le premier dispositif de transfert (40) et au moins un autre moyen d'alimentation (52) pour alimenter des préformes vers le au moins un autre dispositif de transfert (44).

11. Dispositif selon l'une des revendications 1 à 10, **caractérisé en ce que** le dispositif (10) comprend un dispositif d'entrée commun (26) pour introduire des préformes non triées dans le premier dispositif de tri et dans les autres dispositifs de tri (16, 20).

12. Procédé de fabrication de récipients à partir de préformes en matière thermoplastique, comprenant au moins les étapes suivantes :
- distribuer d'un premier flux de préformes triées (18) à partir de préformes non triées introduites dans un premier dispositif de tri (16) ;
- distribuer d'un autre flux de préformes triées (22), séparé du premier flux de préformes (18), à partir d'au moins un autre dispositif de tri(20) ;
- fusionner le premier flux de préformes (18) et le deuxième flux de préformes (20) en un flux commun de préformes (24) ;
- sortie du flux commun de préformes (24) du premier dispositif de tri (16) et du au moins un autre dispositif de tri (20) au moyen d'un dispositif de sortie (32) ; et
- acheminement du flux commun de préformes vers un dispositif de chauffage (12) qui délivre un flux (14) de préformes conditionnées thermiquement ;
**caractérisé en ce qu'**à chaque dispositif de tri (16, 20) est associé un élément de séparation (36) propre qui, en position ouverte, laisse passer une préforme et, en position fermée, arrête le flux de préformes.

13. Procédé selon la revendication 12, **caractérisé en ce que** chaque dispositif de tri est commandé séparément au moyen d'une unité de commande (30) pour commander le premier dispositif de tri (16) et le au moins un autre dispositif de tri (20).

14. Procédé selon la revendication 12 ou 13, **caractérisé en ce que** l'étape consistant à réunir le premier flux de préformes et le deuxième flux de préformes en un flux commun de préformes est réalisée au moyen d'un aiguillage.

15. Procédé selon l'une des revendications 12 à 14, **caractérisé en ce que** le procédé comprend en outre au moins les étapes suivantes:
- la réception du premier flux de préformes (18) à une première position de transfert (42) au moyen d'un premier dispositif de transfert (40) dans un dispositif d'alimentation (38) qui est disposé en aval des dispositifs de tri (16, 20);
- la réception du deuxième flux de préformes (22) à une autre position de transfert (46) au moyen d'au moins un autre dispositif de transfert (44) dans le dispositif d'alimentation (38).
